# EUROPEAN PATENT SPECIFICATION

(11) **EP 2 071 879 B1**
(45) Date of publication and mention of the grant of the patent: **29.08.2012**
(21) Application number: 07291524.2
(22) Date of filing: 13.12.2007
(51) Int. Cl.: H04W 4/00

(54) **Method of providing a terminal with a telecommunication service**
Verfahren zur Versorgung eines Endgerätes mit einem Telekommunikationsdienst
Procédé pour fournir un terminal avec un service de télécommunication

(43) Date of publication of application: 17.06.2009
(73) Proprietor: Alcatel Lucent, 75007 Paris (FR)
(72) Inventor: Wajda, Wieslawa, Dipl.-Ing., 75210 Keltern (DE); Kühn, Edgar, Dr., 70563 Stuttgart (DE)
(74) Representative: Wetzel, Emmanuelle

(56) References cited:
- WO-A-2004/004407
- GB-A- 2 346 507
- US-A1- 2002 087 674
- KAARANEN H. ET AL: "UMTS NETWORKS" 2001, WILEY , XP002486441 * page 268 - page 270 *

## Description

The present invention relates to a method of providing a mobile terminal with a telecommunication service by one or more telecommunication service providers associated with one or more mobile telecommunication networks, a corresponding mobile terminal, and a network node associated with the one or more mobile telecommunication networks to execute this method.

Terms and conditions associated with telecommunication services offered by different service providers, e.g., network operators, may vary significantly. If users wishing to use telecommunication services want to find a favourable offer, they have the burden to establish a connection to some or all of the available service providers, query information about the respective terms and conditions, and compare the received responses. The set-up of a radio connection produces a lot of overhead even if not much information is required.

It is the object of the present invention to improve a selection of a telecommunication service provider for provisioning of a telecommunication service.

The object of the present invention is achieved by a method of providing a mobile terminal with a telecommunication service by one or more telecommunication service providers associated with one or more mobile telecommunication networks, according to claim 1. Furthermore, the object of the present invention is achieved by a mobile terminal for using a telecommunication service provided by one or more telecommunication service providers associated with one or more mobile telecommunication networks, according to claim 5. And the object of the present invention is achieved by a network node associated with one or more mobile telecommunication networks for providing a mobile terminal with a telecommunication service by one or more telecommunication service providers associated with the one or more mobile telecommunication networks, according to claim 6.

The mobile terminal intends to use a telecommunication service. The term "service-specific data" denotes that the data are related to or specify the telecommunication service, in particular the terms and conditions for usage of the telecommunication service.

Prior Art document GB 2 346 507 describes a method of selecting a network in a cellular communications system comprising a plurality of networks in which a user transmits a resource query identifying a service and a service provider to different networks, the networks acquire service provider resource functions from the service provider and determine a respective network resource function applicable to that network for delivery of the service via a further communication element (such as a landline link) and a respective overall resource function incorporating the network and service provider resource functions, networks transmit their overall resource functions to the user and the user selects whichever network has the optimum overall resource function.

While in prior art a terminal in connectionless state had no possibility to communicate with the network and to retrieve or negotiate some specific network attributes in order to support decision in a selection process for a best suited network the terminal will finally connect to, the invention solves the limitation that a terminal can communicate with the network only if it is in a connected state. The present invention provides a method for a connectionless attribute negotiation in mobile networks. In particular, the present invention provides a method for connectionless attribute negotiation between a terminal in idle state and a service provider and/or a network.

The query procedure (query message, response message) consumes no network resources of the one or more mobile telecommunication networks that are queried. During the query procedure, the mobile terminal is not registered at the one or more mobile telecommunication networks that are queried, nor is there an allocation of network resources of the one or more mobile telecommunication networks to the mobile terminal.

Furthermore, the invention provides a user based network selection in a multi-operator scenario. A user has the possibility for negotiation of, e.g., network resources, service price, etc. The idea can be realised in mobile and fixed networks. Moreover, the solution can be implemented without affecting a functionality of existing implementations.

Further advantages are achieved by the embodiments of the invention indicated by the dependent claims.

Preferably, the one or more query messages related to the telecommunication service comprise a point in time when the requested telecommunication service is to be provided, a duration of the requested telecommunication service, a location where the requested telecommunication service is to be provided, a budget available for the requested telecommunication service, e.g., an upper limit of a charge demanded for the requested telecommunication service, a required QoS (= Quality of Service), etc.

According to a preferred embodiment of the invention, one or more publicly accessible communication channels of the one or more mobile telecommunication networks are used for the transmission of the one or more query messages and/or the one or more response messages. In a network based on UMTS/3GPP, for example, a publicly accessible communication channel in up-link may be represented by a random access channel (RACH) and in down-link by a forward access channel (FACH) (UMTS = Universal Mobile Telecommunications System; 3GPP = 3rd Generation Partnership Project). Every user in a network based on UMTS/3GPP is able to send data via a random access channel.

According to another preferred embodiment of the invention, the mobile terminal is in an idle mode when it sends the one or more query messages. Preferably, the idle mode is a mode according to a radio resource control protocol. The one or more network nodes send the one or more response messages to the mobile terminal in said idle mode. The idea of the invention is to allow a user terminal in an idle state, i.e., without an established connection to a telecommunication network and without a registration of the mobile terminal to a telecommunication network, to perform a query to the mobile network and negotiate its attributes without connection establishing.

A RRC protocol has been provided by the 3GPP, see, e.g., the corresponding RRC specification TS 25.331 V8.0.0 (2007-10) (RRC = Radio Resource Control). In the idle mode according to the RRC, no signalling connection and no data connection exists between a UE and a UMTS radio network, also known as UTRAN (UE = User Equipment; UTRAN = UMTS Terrestrial Radio Access Network). In the idle mode, the UE can read system information on a broadcast channel (= BCH) and receive messages via a paging channel (= PCH).

The invention relates to a method of performing connectionless attribute negotiation, a kind of a query service between a mobile terminal in an idle state and a network. To do so a new signalling procedures can be defined. According to another preferred embodiment of the invention, the mobile terminal sends the one or more query messages by sending one or more query requests. These one or more query requests are provided by an additional procedure of a radio resource control protocol. Preferably, the one or more network nodes respond to the received one or more query requests by sending one or more query responses as the one or more response messages. These one or more query responses are provided by an additional procedure of a radio resource control protocol. Preferably, the additional procedure providing the one or more query requests is identical to the additional procedure providing the one or more query responses. This invention introduces a new kind of messages allowing information exchange between the mobile terminal and the network when the terminal is in an idle state.

The invention relates to a method of performing connectionless attribute negotiation, a kind of a query service between a terminal in the idle state and a network. To do so a known signalling procedure can be extended. In a preferred embodiment, the mobile terminal sends the one or more query messages by sending one or more extended radio resource control connection request messages. An extended radio resource control connection request message of the one or more extended radio resource control connection request messages is generated by allocating a value associated with said one or more query messages to a parameter of a radio resource control connection request message whereby the parameter indicates or is associated with a cause of an establishment of a connection.

Preferably, the mobile terminal allocates a value associated with said one or more query messages to the parameter "establishment cause" of the radio resource control connection request message according to the aforementioned RRC specification TS 25.331 V3.0.0. Again, this invention introduces a new kind of messages allowing information exchange between the mobile terminal and the network when the terminal is in an idle state. Preferably, the one or more network nodes respond to the received one or more extended radio resource control connection request messages by using a new message frame for the sending of the one or more response messages.

According to another preferred embodiment of the invention, the mobile terminal initiates - after selecting the at least one of the one or more telecommunication service providers - an establishment of a communication connection between the mobile terminal and the one or more mobile telecommunication networks operated by the selected at least one telecommunication service provider for a provision of said telecommunication service. There is a temporal independence, i.e., an arbitrary period of time, between the selection of the at least one of the one or more telecommunication service providers and the establishment of a communication connection between the mobile terminal and the one or more mobile telecommunication networks operated by the selected at least one telecommunication service provider for a provision of said telecommunication service. That means that the provisioning of a telecommunication service may be delayed with respect to the selection/negotiation of a service provider providing the telecommunication service.

The establishment of the communication connection between the mobile terminal and the one or more mobile telecommunication networks can take place immediately after the selection of the at least one of the one or more telecommunication service providers. For example, a user of a mobile terminal wants to call a called party at once. Therefore, as soon as a suitable service provider has been selected, the connection is established.

Alternatively, there is a certain time span between the selection of the at least one of the one or more telecommunication service providers and the establishment of the communication connection. For example, a user of a mobile terminal wants to have network resources for a telecommunication service reserved in advance and selects a telecommunication service provider well before the desired telecommunication service, e.g., a few minutes to several hours ahead. The user of the mobile terminal defines a time when he wants the connection to be established and selects a telecommunication service provider based on a favourable offer for the defined time in the future. The selected service provider guarantees that he will provide the user/mobile terminal with the telecommunication service at the defined time on the conditions of the offer. That means that the selected service provider reserves network resources in favour of the mobile terminal for the provisioning of the telecommunication service at the predefined time.

Preferably, a radio resource control connection set-up is used for an initiation of the establishment of the communication connection between the mobile terminal and the one or more mobile telecommunication networks operated by the selected at least one telecommunication service provider.

Preferably, the mobile terminal queries, by sending the one or more query messages from the mobile terminal to the one or more network nodes, one or more attributes associated with the telecommunication service provided by the one or more telecommunication service providers and selects the at least one of the one or more telecommunication service providers as a provider of the telecommunication service on the basis of the queried one or more attributes.

Preferably, the control unit of the "selected" network node is adapted to support a provisioning, by the at least one selected telecommunication service provider, of the telecommunication service to the mobile terminal. The term "selected" network node denotes a network node associated with the one or more mobile telecommunication networks which are operated by the selected at least one of the one or more telecommunication service providers.

It is possible that a telecommunication service provider operates one or more telecommunication networks with individual terms and conditions for a telecommunication service in each of the one or more telecommunication networks. It is also possible that a mobile terminal sends one query message to each of one or more telecommunication networks, preferably to each of the one or more available telecommunication networks. And it is possible that a single network node is responsible for two or more different networks and provides a response message which provides service-specific data associated with the one or more telecommunication service providers operating the two or more different networks.

Preferably, the mobile terminal selects a service provider after querying the terms and conditions of the target telecommunication service in two or more networks, providing the mobile terminal with a choice of possible service providers to choose among. This means that the mobile terminal sends one or more query messages related to the telecommunication service to one or more network nodes associated with the two or more mobile telecommunication networks without registering the mobile terminal to the two or more mobile telecommunication networks, that the one or more network nodes process the received one or more query messages and generate one or more response messages to the received query messages, the one or more response messages providing service-specific data associated with two or more of the telecommunication service providers, that the one or more network nodes send the one or more response messages to the mobile terminal without allocation of network resources of the two or more mobile telecommunication networks, that the mobile terminal evaluates the received one or more response messages and selects at least one of the two or more telecommunication service providers based on the evaluation of the received one or more response messages, and that the at least one selected telecommunication service provider provides the mobile terminal with the telecommunication service.

However, it is also possible that the mobile terminal selects a service provider without querying other service providers, e.g., in case the conditions for the telecommunication service offered by service provider are so convincing. This means that the mobile terminal sends a query message related to the target telecommunication service to a network node associated with a mobile telecommunication networks without registering the mobile terminal to the mobile telecommunication networks, that said network node processes the received query message and generates a response message to the received query message, the response message providing service-specific data associated with the telecommunication service provider, that the network node sends the response message to the mobile terminal without allocation of network resources of the mobile telecommunication networks, that the mobile terminal evaluates the received response message, selects the telecommunication service provider based on the evaluation of the received response message, and that the selected telecommunication service provider provides the mobile terminal with the telecommunication service.

According to another preferred embodiment of the invention, the invented method comprises the step of sending, by the mobile terminal, one or more query messages related to the telecommunication service to a centralised network node associated with the one or more mobile telecommunication networks without registering the mobile terminal to the one or more mobile telecommunication networks. The centralised network node may be a central node or a central network function.

According to another preferred embodiment of the invention, the one or more query messages related to the telecommunication service comprise an indicator of a location where the telecommunication service is to be provided. The one or more network nodes process the received one or more query messages, determine service-specific data associated with one or more telecommunication service providers offering a telecommunication service according to the one or more query messages at the indicated location, and generate one or more response messages to the received one or more query messages, the one or more response messages providing the determined service-specific data associated with one or more of the telecommunication service providers.

These as well as further features and advantages of the invention will be better appreciated by reading the following detailed description of presently preferred exemplary embodiments taken in conjunction with accompanying drawings of which:
- Fig. 1: is a diagram of a mobile terminal and a plurality of telecommunication networks according to an embodiment of the invention;
- Fig. 2: is a diagram of a mobile terminal and a plurality of telecommunication networks according to another embodiment of the invention;
- Fig. 3: is a message flow diagram according to a first embodiment of the invention; and
- Fig. 4: is a message flow diagram according to another embodiment of the invention.

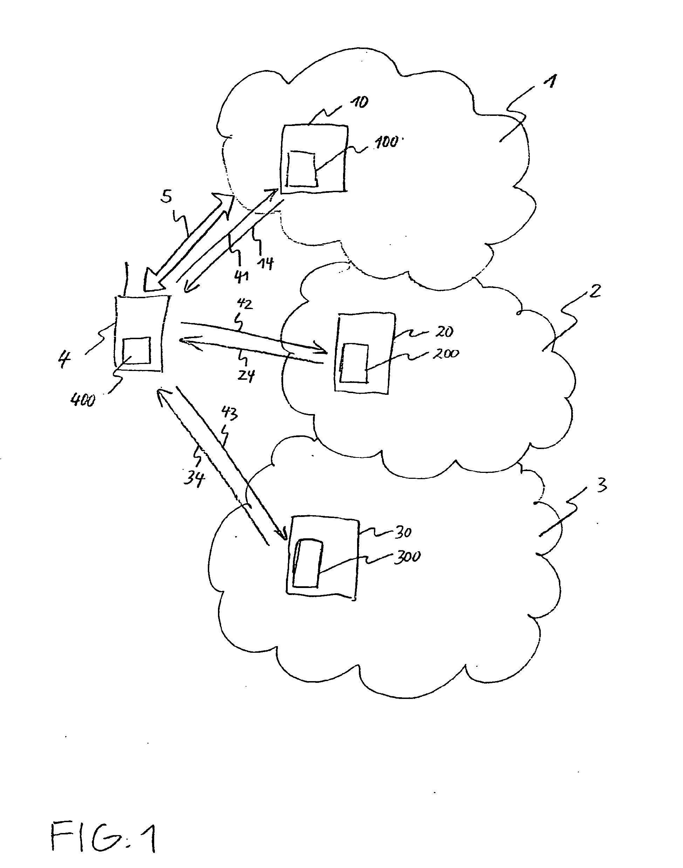

Fig. 1 shows a mobile terminal 4 with a control unit 400, a first mobile telecommunication (access) network 1 comprising a network node 10 with a control unit 100, a second mobile telecommunication (access) network 2 comprising a network node 20 with a control unit 200, and a third mobile telecommunication (access) network 3 comprising a network node 30 with a control unit 300.

The mobile terminal 4 may be, e.g., a mobile telephone, a PDA with a mobile communication function, or a laptop with a mobile communication software (PDA = Personal Digital Assistant). The control unit 400 of the mobile terminal 4 is composed of one or several inter-linked computers, i.e., a hardware platform, a software platform basing on the hardware platform and several application programs executed by the system platform formed by the software and hardware platform. The functionality of the mobile terminal 4 is provided by the execution of these application programs. The application programs or a selected part of these application programs constitute a computer software product providing a telecommunication control service as described in the following, when executed on the system platform. Further, such computer software product is constituted by a storage medium storing these application programs or said selected part of application programs.

The mobile terminal 4 is within the coverage area of the telecommunication networks 1, 2, 3. Let us assume that each of the telecommunication networks 1, 2, 3 is operated by another telecommunication service provider. However, it is also possible that two of the telecommunication networks 1, 2, 3 or all three telecommunication networks 1, 2, 3 are operated by the same telecommunication service provider.

A connectionless communication between the mobile terminal 4 and the network nodes 10, 20, 30 associated with the telecommunication networks 1, 2, 3, respectively, is used to negotiate specific attributes between the mobile terminal 4 (and its user) and all networks 1, 2, 3 in the coverage area, with the target of a flexible selection of a best suited network the mobile terminal 4 will finally connect to.

For example, the user of the mobile terminal 4 defines a user policy with regard to a target connection, e.g., "one hour real-time connection beginning at 14h00 and cheaper than 2 cent/minute". The user inputs the characteristics of the defined user policy into the mobile terminal 4 where data of the user policy are stored in a storage unit of the mobile terminal 4. After that, the user of the mobile terminal 4 starts a query service which is executed as an application on the mobile terminal 4.

Triggered by the query service, the mobile terminal 4, being in an idle mode, sends to the first telecommunication network 1 a query message 41 with regard to terms and conditions associated with telecommunication services offered by the telecommunication service provider operating the telecommunication network 1. The query message 41 is decoded by a network node 10 adapted to receive this kind of query messages, processed by the network node 10, and a response message 14 is sent back from the network node 10 to the mobile terminal 4. The response message 14 comprises data about the terms and conditions associated with telecommunication services offered by the telecommunication service provider operating the telecommunication network 1. For example, the response message 14 received at the terminal 4 from the telecommunication network 1 comprises data (attributes) indicating that the telecommunication service provider operating the telecommunication network 1 offers a one hour real-time connection beginning at 14h00 for 1.7 cent/minute.

The query service stores the received attributes in the storage unit of the mobile terminal 4 and starts a new query 42 to the next telecommunication network 2. The same procedure as aforementioned with respect to the telecommunication network 1 is done between the mobile terminal 4 and the second telecommunication network 2. Again, the network 2 processes data received from the terminal 4, sends a response 24 to the terminal 4, and the data is stored in the terminal 4. And the same procedure as aforementioned with respect to the telecommunication networks 1 and 2 is done between the mobile terminal 4 and the second telecommunication network 3. How many times the procedure will be performed depends on the number of telecommunication service providers accessible in the area or can be specified by the user and configured in the terminal 4, e.g., by a number of providers stored on the SIM card (SIM = Subscriber Identity Module).

After having sent a query message 41, 42, 43 to each of the available telecommunication networks 1, 2, 3, the mobile terminal 4 has collected attributes concerning the user policy from all the available telecommunication networks 1, 2, 3. For example, the response message 24 received from the telecommunication network 2 comprises data (attributes) indicating that the telecommunication service provider operating the telecommunication network 2 offers a one hour real-time connection beginning at 14h00 for 2.1 cent/minute. And the response message 34 received from the telecommunication network 3 comprises data (attributes) indicating that the telecommunication service provider operating the telecommunication network 3 offers a one hour real-time connection beginning at 14h00 for 2.3 cent/minute.

After the query procedure finishes, the application "query service" calculates (evaluates) the connection best fulfilling the user policy. At a pre-defined moment (here: at 14h00), a communication connection 5 is established between the mobile terminal and the selected network 1. This establishment may be triggered by the mobile terminal or by the selected telecommunication network. It is only then that the terminal changes from a connectionless/idle mode to a connected mode. For instance, the terminal is switched by an internal clock from the idle mode into the connected mode when the conditions set for the requested telecommunication service are fulfilled (defined point in time, coverage of the selected telecommunication network, etc.). The communication connection 5 may be used for the requested telecommunication service, e.g., a real-time communication, a data exchange, etc.

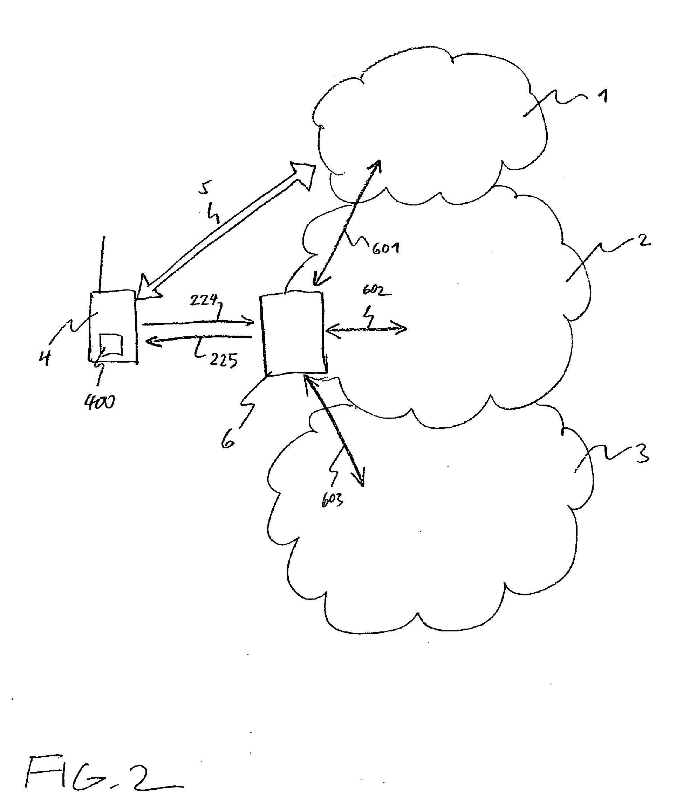

According to another embodiment of the invention, shown in Fig. 2, the mobile terminal 4 negotiates with a super-ordinate network entity 6 which is in control 601, 602, 603 of the telecommunication networks 1, 2, 3 or collects 601, 602, 603 information about the telecommunication networks 1, 2, 3. The functions of this super-ordinate network entity may be provided by a central node associated with the telecommunication networks 1, 2, 3, e.g., a central node responsible for a hand-over between different networks. For instance, this central node may be a LTE MME for 3GPP networks (LTE = Long Term Evolution, MME = Mobility Management Entity). It is also possible that the functions of this super-ordinate network entity are provided in a decentralised manner by a plurality of nodes associated with the telecommunication networks 1, 2, 3.

For example, the user of the mobile terminal 4 defines a user policy with regard to a target connection, e.g., "one hour real-time communication connection beginning at 14h00 and cheaper than 2 cent/minute". The mobile terminal 4, being in an idle mode, sends to the super-ordinate network entity 6 a query message 224 with regard to terms and conditions associated with telecommunication services offered by the telecommunication service providers operating the telecommunication networks 1, 2, 3. For instance, the query message 224 specifies that the user of the terminal 4 requests a one hour real-time communication connection beginning at 14h00. The query message 224 is decoded by the super-ordinate network entity 6 adapted to receive this kind of query messages and processed by the super-ordinate network entity 6.

Based on his knowledge about the telecommunication networks 1, 2, 3, the super-ordinate network entity 6 generates a response message 225 comprising data with regard to terms and conditions associated with telecommunication services offered by the telecommunication service providers operating the telecommunication networks 1, 2, 3. For example, the response message 225 received at the terminal 4 from the super-ordinate network entity 6 comprises data (attributes) indicating that the telecommunication service provider operating the telecommunication network 1 offers a one hour real-time connection beginning at 14h00 for 1.7 cent/minute, indicating that the telecommunication service provider operating the telecommunication network 2 offers a one hour real-time connection beginning at 14h00 for 2.1 cent/minute, and indicating that the telecommunication service provider operating the telecommunication network 3 offers a one hour real-time connection beginning at 14h00 for 2.3 cent/minute. This response message 225 is sent back from the super-ordinate network entity 6 to the mobile terminal 4.

The terminal 4, on the basis of the response message 225, calculates (evaluates) the connection best fulfilling the user policy, i.e., satisfying the condition "one hour real-time communication connection beginning at 14h00 and cheaper than 2 cent/minute". At a defined time, e.g., at 14h00, a communication connection 5 is established between the terminal 4 and the selected network 1. Preferably, the super-ordinate network entity 6 initiates the establishment of the communication connection 5 between the terminal 4 and the selected network 1 at the pre-defined moment. It is only then that the terminal changes from a connectionless/idle mode to a connected mode. The communication connection 5 may be used for the requested telecommunication service, e.g., a real-time communication, a data exchange, etc.

According to another embodiment, the super-ordinate network entity 6 forwards 601, 602, 603 the query message 224 to the telecommunication service providers operating the telecommunication networks 1, 2, 3 and collects 601, 602, 603 their responses. The super-ordinate network entity 6 then generates a response message 225 comprising those collected responses.

The use of a super-ordinate network entity 6 is especially useful if the mobile terminal 4 is not within a coverage area of a specific network at the time it sends the query message but will be at the time the telecommunication service is to be provided. The query message may thus comprise information associated with a location where the telecommunication service is to be provided. The information associated with a location may be geographic co-ordinates, a street address, a telephone number, etc.

Imagine a user of the mobile terminal travelling. The user, currently at a location A, knows that he will be at a hotel at a location B at the end of the day, e.g., at 20h00 local time. At 20h00 local time, the user wants to establish a telecommunication connection from the hotel at location B to his company at location A to transmit data collected during the business day. The user will trigger the query message to include the information that the telecommunication service is to be provided at location B. The super-ordinate network entity 6 determines which telecommunication service providers and telecommunication networks, respectively, are available at the location B and sends to the mobile terminal a response message comprising terms and conditions associated with telecommunication services offered by telecommunication service providers operating the telecommunication networks at the location B. Thus, it is possible to include a network into the selection whereby the mobile terminal is (currently) not within the coverage area of the network.

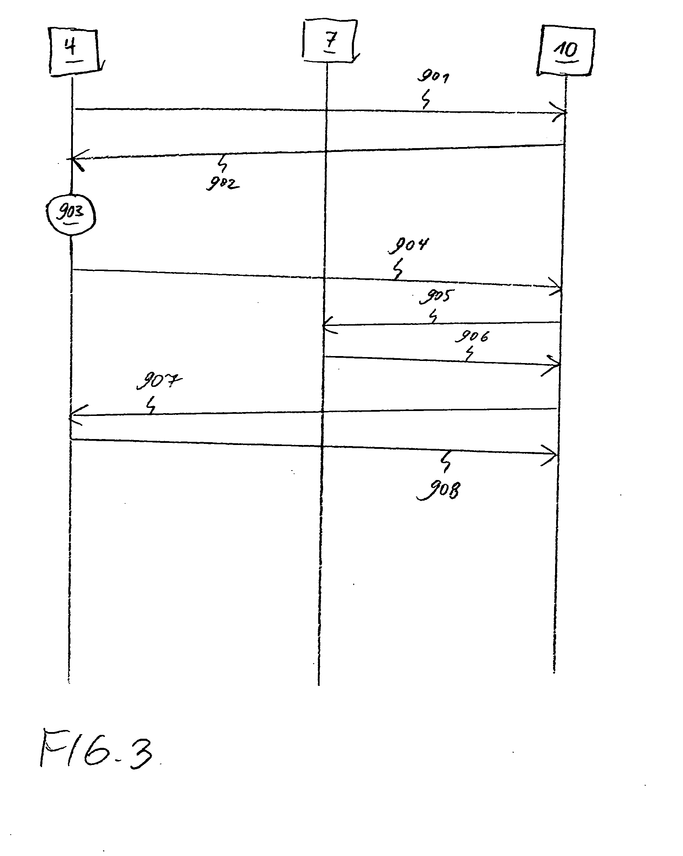

Fig. 3 is a message flow diagram according to another embodiment of the invention. Fig. 3 shows the mobile terminal 4, e.g., acting as a UE, a BTS 7 (= Node B) of the mobile telecommunication network 1, preferably a UMTS network, and the network node 10 of the mobile telecommunication network 1, e.g., a radio network controller (= RNC) of the UMTS network (BTS = Base Transceiver Station). In a UMTS network, a BTS is also known as "Node B". The message flow diagram shows an embodiment based on the RRC protocol where new additional messages fulfilling the idea according to invention are utilised.

While the mobile terminal 4 is in an idle state according to the RRC protocol, the control unit 100 of the mobile terminal 4 initiates a connectionless communication/query with the network node 10 of the UMTS network 1. The connectionless communication is used to make a negotiation of specific attributes between the mobile terminal 4 and its user, respectively, and all networks within the coverage area of the mobile terminal 4, with the aim of a flexible selection of a best suited network the mobile terminal 4 will finally connect to.

The control unit 400 of the mobile terminal 4 generates a RRC query request 901 and triggers a transmitter (e.g., a transceiver interface, not shown) of the mobile terminal 4 to send the generated RRC query request 901 to the network node 10. The RRC query request 901 comprises one or more parameters, the one or more parameters indicating data that the mobile terminal 4 requests from the network node 10 concerning conditions for a target telecommunication service in the UMTS network 1. These requested data are also known as attributes. The generation of the RRC query request 901 is based in a user policy defined by the user of the mobile terminal 4 and stored in a storage unit of the mobile terminal 4.

For example, the parameters comprise an indication of a start time of a target real-time communication (e.g., 14:00 h), an indication of a duration of the target real-time communication (1 hour), and an indication of an upper cost limit (cheaper than 2 cent/minute).

A receiver (e.g., a transceiver interface, not shown) of the network node 10 receives the RRC query request 901 and forwards it to the control unit 100 of the network node 10. The control unit 100 of the network node 10 decodes the RRC query request 901 and processes the RRC query request 901 in accordance with the one or more parameters. That means that the control unit 100 analyses the one or more parameters (the queried attributes), extracts corresponding data from a data base provided by the telecommunication service provider, and generates a RRC query response 902 to the RRC query request 901. The generated RRC query response 902 comprises one or more parameters associated with the queried attributes. For example, the parameters comprise an indication of an available start time of a real-time communication offered by the service provider operating the telecommunication network 1 (e.g., 14h00), an indication of an available duration of the offered real-time communication (1 hour), and an indication of the cost associated with the offered real-time communication (1.7 cent/minute). The control unit 100 of the network node 10 triggers a transmitter (e.g., a transceiver interface, not shown) of the network node 10 to send the RRC query response 902 to the mobile terminal 4.

The mobile terminal 4 receives the RRC query response 902 and forwards it to the control unit 400 of the mobile terminal 4. The control unit 400 of the mobile terminal 4 initiates the storage of the one or more parameters (attributes) in a storage unit (e.g., a RAM, not shown) of the mobile terminal 4 (RAM = Random Access Memory). It is important to note that the RRC query request 901 and RRC query response 902 are exchanged connectionless, i.e., without the mobile terminal 4 being registered to the telecommunication network 1 of the network node 10.

Preferably, the steps RRC query request 901 and RRC query response 902 are repeated in a connectionless way between the mobile terminal 4 and network nodes of other networks (not shown), i.e., telecommunication networks operated by other telecommunication service providers. In this manner the mobile terminal 4 receives one or more RRC query responses and stores the corresponding one or more parameters (attributes) in the storage unit of the mobile terminal 4. Thus, the storage unit of the mobile terminal 4 contains at least one, preferably a plurality of parameters concerning terms and conditions of real-time communications offered by different telecommunication service providers.

Now the control unit 400 of the mobile terminal 4 is able to evaluate the plurality of parameters stored in the storage unit and to make a selection of a most favourable telecommunication service provider, and corresponding to the most favourable telecommunication service provider, with the best suited network the mobile terminal 4 will finally connect to. In other words, after the query procedure finishes, the control unit 400 of the mobile terminal 4 calculates/selects a connection which best fulfils the user policy and opens the connection to the selected network. Let us assume that the most suitable telecommunication network for the target telecommunication service requested by the user is the telecommunication network 1.

Now the mobile terminal 4 has decided that the mobile terminal 4 connects to the telecommunication network 1. After the evaluation and selection step 903, a RRC connection set-up according to the aforementioned RRC specification TS 25.331 is done. The mobile terminal 4 changes from an idle to a connected mode. In step 904, the mobile terminal 4 sends a RRC connection request to the network node 10. The network node 10 sends a NBAP radio link set-up request 905 to the BTS 7 (NBAP = Node B Application Part). The BTS 7 sends a NBAP radio link set-up response 906 to the network node 10. The network node 10 sends a RRC connection set-up message (FACH) 907 to the mobile terminal 4 (FACH = Forward Access Channel). Finally, the mobile terminal 4 sends a RRC connection set-up complete message (DCH) 908 to the network node 10 (DCH = Dedicated Channel).

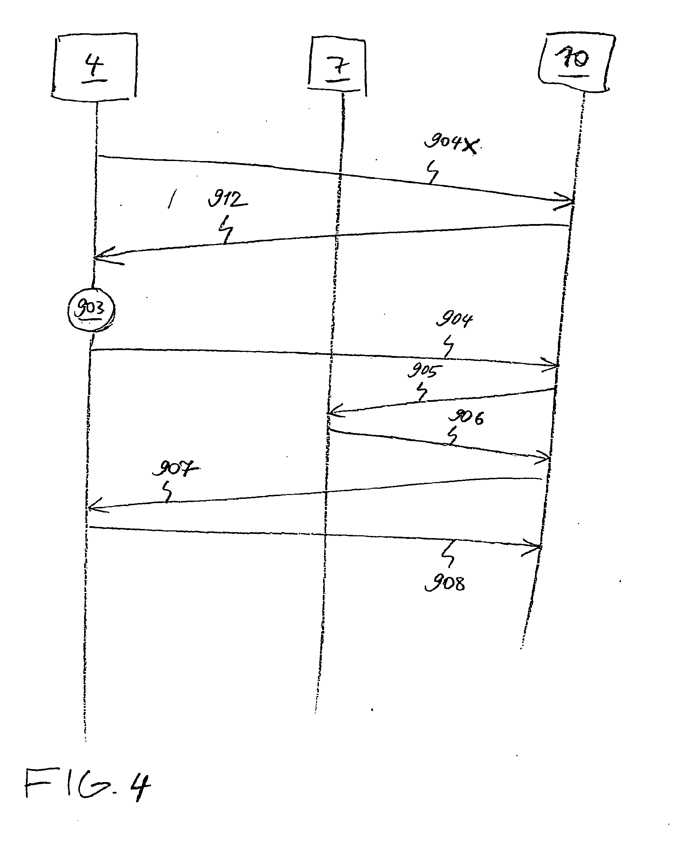

Fig. 4 is a message flow diagram according to another embodiment of the invention. Fig. 4 shows a possible alternative to the solution according to Fig. 3. The alternative shown in Fig. 4 has as an essential feature not to use the new additional messages 901 and 902 but to extend the RRC connection request message 904 to an extended RRC connection request message 904X. In order to achieve it, one of the parameters of the message RRC connection request 904, e.g., the parameter "Establishment cause" will be assigned to a new value, e.g., the value "Query". The response 912 to this extended message 904X, sent from the network node 10 to the mobile terminal 4, can happen immediately using a new message frame. With respect to the remaining steps 903 to 908 (= RRC connection set-up), we refer to the above mentioned description given with respect to Fig. 3.

## Claims

1. A method of providing a mobile terminal (4) with a telecommunication service by one or more telecommunication service providers associated with one or more mobile telecommunication networks (1, 2, 3), **characterised in**
**that** the method comprises the steps of:
sending, by the mobile terminal (4), one or more query messages (41, 42, 43) related to the telecommunication service to one or more network nodes (10, 20, 30) associated with the one or more mobile telecommunication networks (1, 2, 3) without registering the mobile terminal (4) to the one or more mobile telecommunication networks (1, 2, 3) using one or more publicly accessible communication channels for query messages of the one or more mobile telecommunication networks (1, 2, 3) for the transmission of the one or more query messages (41, 42, 43);
processing the received one or more query messages (41, 42, 43) by the one or more network nodes (10, 20, 30) and generating one or more response messages (14, 24, 34) to the received query messages (41, 42, 43), the one or more response messages (14, 24, 34) providing service-specific data associated with one or more of the telecommunication service providers;
sending, by the one or more network nodes (10, 20, 30), the one or more response messages (14, 24, 34) to the mobile terminal (4) without allocation of network resources of the one or more mobile telecommunication networks (1, 2, 3) using one or more publicly accessible communication channels for query messages of the one or more mobile telecommunication networks (1, 2, 3) for the transmission of the one or more response messages (14, 24, 34);
evaluating the received one or more response messages (14, 24, 34) by the mobile terminal (4);
selecting at least one of the one or more telecommunication service providers based on the evaluation of the received one or more response messages (14, 24, 34);
reserving resources for the provisioning of the telecommunication service and/or providing, by the at least one selected telecommunication service provider, the mobile terminal (4) with the telecommunication service, whereby either the method further comprises the steps of:
providing an additional procedure of a radio resource control protocol, the additional procedure comprising a query request (901) to be sent from the mobile terminal (4) to the one or more network nodes (10, 20, 30) and a query response (902) to be sent from the one or more network nodes (10, 20, 30) to the mobile terminal (4); and
sending one or more of said query requests (901) of the additional procedure as the one or more query messages (41, 42, 43) and one or more of said query responses (902) of the additional procedure as the one or more response messages (14, 24, 34),
or the method further comprises the steps of:
extending a radio resource control connection request message by allocating a value associated with said one or more query messages (41, 42, 43) to the parameter "establishment cause" of the radio resource control connection request message;
sending one or more of said extended radio resource control connection request messages (904X) as the one or more query messages (41, 42, 43); and
sending, by the one or more network nodes (10, 20, 30), the one or
more response messages (14, 24, 34) by using a new message frame (912).

2. The method of claim 1,
**characterised in**
**that** the method further comprises the step of:
after selecting the at least one of the one or more telecommunication service providers, initiating by the mobile terminal (4) an establishment of a communication connection (5) between the mobile terminal (4) and
the one or more mobile telecommunication networks (1, 2, 3) operated by the selected at least one telecommunication service provider for a provision of said telecommunication service.

3. The method of claim 2,
**characterised in**
**that** the method comprises the steps of:
initiating the establishment of the communication connection (5) between the mobile terminal (4) and the one or more mobile telecommunication networks (1, 2, 3) operated by the selected at least one telecommunication service provider by performing a radio resource control connection set-up (904 to 908).

4. The method of claim 1,
**characterised in**
**that** the method comprises the steps of:
querying, by sending the one or more query messages (41, 42, 43) from the mobile terminal (4) to the one or more network nodes (10, 20, 30),
one or more attributes associated with the telecommunication service provided by the one or more telecommunication service providers; and
selecting the at least one of the one or more telecommunication service providers as a provider of the telecommunication service on the basis of the queried one or more attributes.

5. A mobile terminal (4) for using a telecommunication service provided by one or more telecommunication service providers associated with one or more mobile telecommunication networks (1, 2, 3),
**characterised in**
**that** the mobile terminal (4) comprises a control unit (400) adapted to send one or more query messages (41, 42, 43) related to the telecommunication service to one or more network nodes (10, 20, 30) associated with the one or more mobile telecommunication networks (1, 2, 3) without registering the mobile terminal (4) to the one or more mobile telecommunication networks (1, 2, 3) using one or more publicly accessible communication channels for query messages of the one or more mobile telecommunication networks (1, 2, 3) for the transmission of the one or more query messages (41, 42, 43), receive one or more response messages (14, 24, 34) to the one or more query messages (41, 42, 43) without allocation of network resources of the one or more mobile telecommunication networks (1, 2, 3) using one or more publicly accessible communication channels for query messages of the one or more mobile telecommunication networks (1, 2, 3) for the transmission of the one or more response messages (14, 24, 34), the one or more response
messages (14, 24, 34) generated by the one or more network nodes (10, 20, 30) after receipt and processing of the one or more query message (41, 42, 43) by the one or more network nodes (10, 20, 30), and the one or more response messages (14, 24, 34) providing service-specific data being associated with one or more of the telecommunication service providers, evaluate the received one or more response messages (14, 24, 34), select at least one of the one or more telecommunication service providers based on the evaluation of the received one or more response messages (14, 24, 34), and control the use of the telecommunication service provided by the at least one selected telecommunication service provider,
whereby either the control unit (400) is further adapted to send one or more query requests (901) of an additional prodecure as the one or more query messages (41, 42, 43) and receive one or more query responses (902) of the additional procedure as the one or more response messages (14, 24, 34), wherein the additional procedure is provided as an additional procedure of a radio resource control protocol and comprises a query request (901) to be sent, by the mobile terminal (4), to the one or more network nodes (10, 20, 30) and a query response (902) to be received by the mobile terminal (4) from the one or more network nodes (10, 20, 30)
or the control unit (400) is further adapted to send one or more extended radio resource control connection request messages (904X) as the one or more query messages (41, 42, 43); and
receive the one or more response messages (14, 24, 34), sent by the one or more network nodes (10, 20, 30), by using a new message frame (912), wherein one of the extended radio resource control connection request messages Is provided by extending a radio resource control connection message by allocating a value associated with said one or more query messages (41, 42, 43) to the parameter "establishment cause" of the radio resource control connection request message.

6. A network node (10, 20, 30) associated with one or more mobile telecommunication networks (1, 2, 3) for providing a mobile terminal (4) with a telecommunication service by one or more telecommunication service providers associated with the one or more mobile telecommunication networks (1, 2, 3),
**characterised in**
**that** the network node (10, 20, 30) comprises a control unit (100, 200, 300) adapted to receive, from the mobile terminal (4), one or more query messages (41, 42, 43) related to the telecommunication service without registering the mobile terminal (4) to the one or more mobile telecommunication networks (1, 2, 3) using one or more publicly accessible communication channels for query messages of the one or more mobile telecommunication networks (1, 2, 3) for the transmission of the one or more query messages (41, 42, 43), process the received one or more query messages (41, 42, 43), generate one or more response messages (14, 24, 34) to the received query messages (41, 42, 43), the one or more response messages (14, 24, 34) providing service-specific data associated with one or more of the telecommunication service providers, send the one or more response messages (14, 24, 34) to the mobile terminal (4) without allocation of network resources of the one or more mobile telecommunication networks (1, 2, 3) using one or more publicly accessible communication channels for query messages of the one or more mobile telecommunication networks (1, 2, 3) for the transmission of the one or more response messages (14, 24, 34) for evaluation of the received one or more response messages (14, 24, 34) and selection of at least one of the one or more telecommunication service providers based on the evaluation of the received one or more response messages (14, 24, 34) by the mobile terminal (4), and initiate a reservation of resources for the provisioning of the telecommunication service,
whereby either the control unit (100, 200, 300) is further adapted to receive one or more query requests (901) of an additional prodecure as the one or more query messages (41, 42, 43) and send one or more query responses (902) of the additional procedure as the one or more response messages (14, 24, 34), wherein the additional procedure is provided as an additional procedure of a radio resource control protocol and comprises a query request (901) to be received by the network node (10, 20, 30) from the mobile terminal (4) and a query response (902) to be sent, by the network node (10, 20, 30), to the mobile terminal (4)
or the control unit (100, 200, 300) is further adapted to receive one or more extended radio resource control connection request messages (904X) as the one or more query messages (41, 42, 43); and
send the one or more response messages (14, 24, 34) by using a new message frame (912), wherein one of the extended radio resource control connection request messages is provided by extending a radio resource control connection message by allocating a value associated with said one or more query messages (41, 42, 43) to the parameter "establishment cause" of the radio resource control connection request message.

## Patentansprüche

1. Verfahren zur Bereltstellung, durch einen oder mehrere mit einem oder mehreren mobllen Telekommunikationsnetzwerken (1, 2, 3) assoziierte Telekommunikationsdienstanbieter, eines Telekommunikationsdienstes an ein mobiles Endgerät (4),
**dadurch gekennzelchnet,**
dass das Verfahren die folgenden Schritte umfasst:
Senden, durch das mobile Endgerät (4), einer oder mehrerer Abfragenachrichten (41, 42, 43) in Bezug auf den Telekommunikationsdienst an einen oder mehrere mit dem einen oder mehreren mobilen Telekommunikationsnetzwerken (1, 2, 3) assoziierten Netzwerkknoten (10, 20, 30), ohne das mobile Endgerät (4) bei einem oder mehreren mobilen Telekommunikationsnetzwerken (1, 2, 3) zu registrieren,
unter Verwendung eines oder mehrerer öffentlich zugänglicher Kommunikationskanäle für Abfragenachrichten des einen oder der mehreren mobilen Telekommunikationanetzwerke (1, 2, 3) für die Übertragung der einen oder mehreren Abfragenachrichten (41, 42, 43);
Verarbeiten der empfangenen einen oder mehreren Abfragenachrichten (41, 42, 43) durch den einen oder mehrere Netzwerkknoten (10, 20, 30), und Erzeugen einer oder mehrerer Antwortnachrichten (14, 24, 34) auf die empfangenen Abfragenachrichten (41, 42, 43), wobei die eine oder mehreren Antwortnachrichten (14, 24, 34) dienstspezifische Daten, die mit einem oder mehreren der Telekommunikationsdienstanbleter assoziiert sind, bereitstellen;
Senden, durch den einen oder mehrere Netzwerkknoten (10, 20, 30), der einen oder mehrerer Antwortnachrichten (14, 24, 34) an das mobile Endgerät (4) ohne Zuteilung von Netzwerkressourcen des einen oder der mehreren mobilen Telekommunikationsnetzwerke (1, 2, 3), unter Verwendung eines oder mehrerer öffentlich zugänglicher Kommunikationskanäle für Abfragenachrichten des einen oder der mehreren mobilen Telekommunikationsnetzwerke (1, 2, 3) für die Übertragung der einen oder mehrerer Antwortnachrichten (14, 24, 34);
Bewerten der empfangenen einen oder mehreren Antwortnachrichten (14, 24, 34) durch das mobile Endgerät (4);
Auswählen mindestens eines der besagten ein oder mehreren Telekommunikationsdienstanbieter auf der Basis der Bewertung der empfangenen einen oder mehreren Antwortnachrichten (14, 24, 34);
Reservieren von Ressourcen für die Bereitstellung des Telekommunikationsdienstes und/oder Bereitstellen, durch den mindestens einen ausgewählten Telekommunikationsdienstanbieter, des Telekommunikationsdienstes an das mobile Endgerät (4), wobei das Verfahren entweder die folgenden Schritte umfasst:
Bereitstellen eines zusätzlichen Verfahrens eines Funkressourcensteuerungsprotokolls, wobei das zusätzliche Verfahren das Senden einer Abfrageanforderung (901) von dem mobilen Endgerät (4) an den einen oder mehrere Netzwerkknoten (10, 20, 30) und das Senden einer Abfrageantwort (902) von dem einen oder mehreren Netzwerkknoten (10, 20, 30) an das mobile Endgerät (4) umfasst; und
Senden einer oder mehrerer der besagten Abfrageanforderungen (901) des zusätzlichen Verfahrens als die eine oder mehreren Abfragenachrichten (41, 42, 43) und einer oder mehrerer der besagten Abfrageantworten (902) der zusätzlichen Verfahren als die eine oder mehreren Antwortnachrichten (14, 24, 34),
oder das Verfahren die folgenden Schritte umfasst:
Erweitern einer Funkrossourcensteuerungsverbindungs-Anforderungsnachricht durch Zuteilen eines mit der besagten einen oder den besagten mehreren Abfraganachrichten (41, 42, 43) assoziierten Wertes an den "Establishment Cause"-Parameter der Funkreasourcensteuerungsvsrbindungs-Anforderungsnachricht;
Senden einer oder mehrerer der besagten erweiterten Funkressourcensteuerungsverbindungs-Anforderungsnachrichten (904X) als die eine oder mehreren Abfragenachrichten (41, 42, 43); und
Senden, durch den einen oder die mehreren Netzwerkknoten (10, 20, 30), der einen oder mehreren Antwortnachrichten (14, 24, 34) unter Verwendung eines neuen Nachrichtenrahmens (912).

2. Verfahren nach Anspruch 1,
**dadurch gekennzeichnet,**
**dass** das Verfahren weiterhin den folgenden Schritt umfasst:
nach Auswählen des mindestens einen des ein oder mehreren Telekommunikationsdienstanbleter, Initiieren, durch das mobile Endgerät (4),
eines Aufbaus einer Kommunikationsverbindung (5) zwischen dem mobilen Endgerät (4) und dem einen oder mehreren mobilen Telekommunikationsnetzwerken (1, 2, 3), die von dem ausgewählten mindestens einen Telekommunikationsdienstanbieter betrieben werden, für ein Bereltstellen des besagten Telekommunikationsdienstes.

3. Verfahren nach Anspruch 2,
**dadurch gekennzelchnet,**
dass das Verfahren die folgenden Schritte umfasst:
Initiieren des Aufbaus der Kommunikationsverbindung (5) zwischen dem mobilen Endgerät (4) und dem einen oder mehreren von dem ausgewählten mindestens einen Telekommunikationsdienstanbieter betriebenen mobilen Telekommunikationsnetzwerken (1, 2, 3) durch Ausführen eines Funkressourcensteuerungs-Verbindungsaufbaus (904 bis 908).

4. Verfahren nach Anspruch 1,
**dadurch gekennzeichnet,**
**dass** das Verfahren die folgenden Schritte umfasst:
Abfragen, durch Senden der einen oder mehreren Abfragenachrichten (41, 42, 43) von dem mobilen Endgerät (4) an den einen oder die mehreren Netzwerkknoten (10, 20, 30), eines oder mehrerer mit dem von dem einen oder den mehreren Telekommunikatlonsdienstanbietern bereitgestellten Telekommunikationsdienst assoziierten Attributen; und
Auswählen des besagten mindestens einen des einen oder der mehreren Telekommunikationsdienstanbieter als ein Anbieter des Telekommunikationsdienstes auf der Basis des einen oder der mehreren abgefragten Attribute.

5. Mobiles Endgerät (4) zur Nutzung eines von mit einem oder mehreren mobilen Telekommunikationsnetzwerken (1, 2, 3) assoziierten Telekommunikationsdienstanbietern bereitgestellten Telekommunikationsdienst,
**dadurch gekennzelchnet,**
dass das mobile Endgerät (4) eine Steuereinheit (400) umfasst, welche dazu ausgelegt ist, eine oder mehrere sich auf den Telekommunikationsdienst beziehende Abfragenachrichten (41, 42, 43) an einen oder mehrere mit dem einen oder den mehreren mobilen Telekommunikationsnetzwerken (1, 2, 3) assozllerte Netzwerkknoten (10, 20, 30) zu senden, ohne das mobile Endgerät (4) bei dem einen oder den mehreren Telekommunikationsnetzwerken (1, 2, 3) zu registrieren, unter Verwendung eines oder mehrerer öffentlich zugänglicher Kommunikationskanäle für Abfragenachrichten des einen oder der mehreren mobilen Telekommunikatlonsnetzwerke (1, 2, 3) für die Übertragung der einen oder mehrerer Abfragenachrichten (41, 42, 43), eine oder mehrere Antwortnachrichten (14, 24, 34) auf die eine oder die mehreren Abfragenachrichten (41, 42, 43) ohne Zuteilung von Netzwerkressourcen des einen oder der mehreren mobilen Telekommunikationsnetzwerke (1 2, 3) zu empfangen, unter Verwendung eines oder mehrerer öffentlich zugänglicher Kommunikationskanäle für Abfragenachrichten des einen oder der mehreren mobilen Telekommunikationsnetzwerke (1, 2, 3) für die Übertragung der einen oder mehreren Antwortnachrichten (14, 24, 34), wobei die eine oder mehreren Antwortnachrichten (14, 24, 34) nach Empfang und Verarbeitung der einen oder mehreren Abfragenachrichten (41, 42, 43) durch den elnen oder die mehreren Netzwerkknoten (10, 20, 30) an dem einen oder den mehreren Netzwerkknoten (10, 20, 30) erzeugt werden, und wobei die eine oder die mehreren Antwortnachrichten (14, 24, 34) mit dem einen oder den mehreren der Telekommunlkatlonsdienstanbietern assoziierte dienstspeziflsche Daten bereitstellen, die empfangenen eine oder mehreren Antwortnachrichten (14, 24, 34) zu bewerten, mindestens eine der ein oder mehreren Telekommunikationsdienstanbieter auf der Basis der Bewertung der empfangenen einen oder mehreren Antwortnachrichten (14, 24, 34) auszuwählen und die Nutzung des von dem mindestens einen ausgewählten Telekommunikationsdienstanbieter bereitgestellten Telekommunikationsdienst zu steuern,
wobei die Steuereinheit (400) entweder weiterhin dazu ausgelegt ist, eine oder mehrere Abfrageanforderungen (901) eines zusätzlichen Verfahrens als die eine oder mehreren Abfragenachrlchten (41, 42, 43) zu senden und eine oder mehrere Abfrageantworten (902) des zusätzlichen Verfahrens als die eine oder mehreren Antwortnachrichten (14, 24, 34) zu empfangen, wobei das zusätzliche Verfahren als ein zusätzliches Verfahren eines Funkressourcensteuerungsprotokolls bereitgestellt wird und eine von dem mobilen Endgerät (4) an den einen oder die mehreren Netzwerkknoten (10, 20, 30) zu sendende Abfrageanforderung (901) und eine an dem mobilen Endgerät (4) von dem einen oder den mehreren Netzwerkknoten (10, 20, 30) zu empfangende Abfrageantwort umfasst;
oder die Steuereinheit (400) weiterhin dazu ausgelegt ist, eine oder mehrere erweiterte Funkressourcensteuerungsverbindungs-Anforderungsnachrichten (904X) als die eine oder mehreren Abfragenachrichten (41, 42, 43) zu senden; und die eine oder mehreren von dem einen oder den mehreren Netzwerkknoten (10, 20, 30) unter Verwendung eines neuen Nachrichtenrahmens (912) gesendeten Antwortnachrichten (14, 24, 34) zu empfangen, wobei eine der erweiterten Funkressourcensteuerungsverbindungs-Anforderungsnachrichten durch Erweitern einer Funkressourcensteuerungs-Verbindungsnachricht durch Zuwelsen eines mit der besagten einen oder den besagten mehreren Abfragenachrichten (41, 42, 43) assoziierten Wertes an den "Establishment Cause"-Parameter der Funkressourcensteuerungsverbindungs-Anforderungsnachricht bereitgestellt wird.

6. Netzwerkknoten (10, 20, 30), welcher mit einem oder mehreren mobilen Telekommunikationsnetzwerken (1, 2, 3) assoziiert ist, zum Bereitstellen eines Telekommunikationsdienstes durch einen oder mehrere Telekommunikationsdienstanbieter, die mit dem einen oder den mehreren mobilen Telekommunikationsnetzwerken (1, 2, 3) assoziiert sind, an das mobile Endgerät (4),
**dadurch gekennzeichnet,**
**dass** der Netzwerkknoten (10, 20, 30) eine Steuereinheit (100, 200, 300) umfasst, welche dazu ausgelegt ist, eine oder mehrere sich auf den Telekommunikationsdienst beziehende Abfragenachrichten (41, 42, 43) von dem mobilen Endgerät (4) zu empfangen, ohne das mobile Endgerät (4) bei dem einen oder den mehreren Telekommunikationsnetzwerken (1, 2, 3) zu registrieren, unter Verwendung eines oder mehrerer öffentlich zugänglicher Kommunikationskanäle für Abfragenachrichten des einen oder der mehreren mobilen Telekommunikationsnetzwerke (1, 2, 3) für die Übertragung der einen oder mehreren Abfragenachrichten (41, 42, 43), die eine oder mehreren empfangenen Abfragenachrichten (41, 42, 43) zu verarbeiten, eine oder mehrere Antwortnachrichten (14, 24, 34) auf die empfangenen Abfragenachrichten (41, 42, 43) zu erzeugen, wobei die eine oder mehreren Antwortnachrichten (14, 24, 34) dienstspezifische Daten, die mit dem einen oder den mehreren Telekommunikationsdienstanbietern assoziiert sind, bereitstellen, eine oder mehrere Antwortnachrichten (14, 24, 34) ohne Zuteilung von Netzwerkrassourcan des einen oder der mehreren mobilen Telekommunikationsnetzwerke (1 2, 3) unter Verwendung eines oder mehrerer öffentlich zugänglicher Kommunikationskanäle für Abfragenachrichten des einen oder der mehreren mobilen Telekommunikationsnetzwerke (1, 2, 3) für die Übertragung der einen oder mehreren Antwortnachrichten (14, 24, 34) zur Bewertung der empfangenen einen oder mehreren Antwortnachrichten (14, 24, 34) und zur Auswahl mindestens eines der ein oder mehreren Telekommunikationsdienstanbieter auf der Basis der Bewertung der empfangenen einen oder mehreren Antwortnachrichten (14, 24, 34) durch das mobile Endgerät (4) an das mobile Endgerät (4) zu senden, und eine Reservierung von Ressourcen für die Bereitstellung des Telekommunikationsdienstes zu initiieren,
wobei die Steuereinheit (100, 200, 300) entweder weiterhin dazu ausgelegt ist, eine oder mehrere Abfrageanforderungen (901) eines zusätzlichen Verfahrens als die eine oder mehreren Abfragenachrichten (41, 42, 43) zu empfangen und eine oder mehrere Abfrageantworten (902) des zusätzlichen Verfahrens als die eine oder mehreren Antwortnachrichten (14, 24, 34) zu senden, wobei das zusätzliche Verfahren als ein zusätzliches Verfahren eines Funkressourcensteuerungsprotokolls bereitgestellt wird und eine von dem mobilen Endgerät (4) an dem Netzwerkknoten (10, 20, 30) zu empfangende Abfrageanforderung (901) und eine von dem Netzwerkknoten (10, 20, 30) an das mobile Endgerät (4) zu sendende Abfrageantwort umfasst;
oder die Steuereinheit (100, 200, 300) weiterhin dazu ausgelegt ist, eine oder mehrere erweiterte Funkressourcensteuerungsverbindungs-Anforderungsnachrichten (904X) als die eine oder mehreren Abfragenachrichten (41, 42, 43) zu empfangen; und
die eine oder mehreren Antwortnachrichten (14, 24, 34) unter Verwendung eines neuen Nachrichtenrahmens (912) zu senden, wobei eine der erweiterten Funkressourcensteuerungsverbindungs-Anforderungsnachrichten durch Erweitern einer Funkressourcensteuerungs-Verbindungsnachricht durch Zuweisen eines mit der besagten einen oder den besagten mehreren Abfragenachrichten (41, 42, 43) assoziierten Wertes an den "Establishment Cause"-Parameter der Funkressourcensteuerungsverbindungs-Anforderungsnachricht bereitgestellt wird.

## Revendications

1. Procédé de fourniture d'un terminal mobile (4) avec un service de télécommunication par un ou plusieurs fournisseurs de services de télécommunication associés à un ou plusieurs réseaux de télécommunications mobiles (1, 2, 3),
**caractérisé en ce que**
le procédé comprend les étapes suivantes :
envoyer, au moyen du terminal mobile (4), un ou plusieurs messages de requête (41, 42, 43) liés au service de télécommunication à un ou plusieurs noeuds de réseau (10, 20, 30) associés à un ou plusieurs réseaux de télécommunications mobiles (1, 2, 3) sans enregistrer le terminal mobile (4) dans le ou les réseaux de télécommunications mobiles (1, 2, 3) en utilisant un ou plusieurs canaux de communication accessibles publiquement pour des messages de requête du ou des réseaux de télécommunications mobiles (1, 2, 3) pour la transmission du ou des messages de requête (41, 42, 43) ;
traiter le ou les messages de requête (41, 42, 43) reçus par le ou les noeuds de réseau (10, 20, 30) et générer un ou plusieurs messages de réponse (14, 24, 34) aux messages de requête (41, 42, 43) reçus, le ou les messages de réponse (14, 24, 34) fournissant des données propres au service associées à un ou plusieurs des fournisseurs de services de télécommunication ;
envoyer, au moyen du ou des noeuds de réseau (10, 20, 30), le ou les messages de réponse (14, 24, 34) au terminal mobile (4) sans allouer de ressources réseau du ou
des réseaux de télécommunications mobiles (1, 2, 3) en utilisant un ou plusieurs canaux de communication accessibles publiquement pour des messages de requête du ou des réseaux de télécommunications mobiles (1, 2, 3) pour la transmission du ou des messages de réponse (14, 24, 34) ;
évaluer le ou les messages de réponse (14, 24, 34) reçus par le terminal mobile (4)
sélectionner au moins un parmi le ou les fournisseurs de services de télécommunication en se basant sur l'évaluation du ou des messages de réponse (14, 24, 34) reçus ;
réserver des ressources pour la fourniture du service de télécommunication et/ou fournir, par l'au moins un fournisseur de services de télécommunication sélectionné,
le terminal mobile (4) avec le service de télécommunication, le procédé comprenant en outre les étapes suivantes :
fournir une procédure supplémentaire d'un protocole de commande de ressources radio, la procédure supplémentaire comprenant une demande de requête (901) devant être envoyée depuis le terminal mobile (4) vers le ou les noeuds de réseau (10, 20, 30) et une réponse de requête (902) devant être envoyée depuis le ou les noeuds de réseau (10, 20, 30) vers le terminal mobile (4) ; et
envoyer une ou plusieurs desdites demandes de requête (901) de la procédure supplémentaire en tant que un ou plusieurs messages de requête (41, 42, 43) et une ou plusieurs desdites réponses de requête (902) de la procédure supplémentaire en tant que un ou plusieurs messages de réponse (14, 24, 34), ou le procédé comprenant en outre les étapes suivantes :
étendre un message de demande de connexion de commande de ressources radio en allouant une valeur associée auxdits un ou plusieurs messages de requête (41, 42, 43) au paramètre « cause d'établissement » du message de demande de connexion de commande de ressources radio ;
envoyer un ou plusieurs desdits messages de demande de connexion de commande de ressources radio étendus (904X) en tant que un ou plusieurs messages de requête (41, 42, 43) ; et
envoyer, au moyen du ou des noeuds de réseau (10, 20, 30), le ou les messages de réponse (14, 24, 34) en utilisant une nouvelle trame de message (912).

2. Procédé selon la revendication 1,
**caractérisé en ce que**
le procédé comprend en outre l'étape suivante :
après avoir sélectionné l'au moins un parmi le ou les fournisseurs de services de télécommunication, initier au moyen du terminal mobile (4) un établissement d'une connexion de communication (5) entre le terminal mobile (4) et le ou les réseaux de télécommunications mobiles (1, 2, 3) exécutés par l'au moins un fournisseur de services de télécommunication sélectionné pour une fourniture dudit service de télécommunication.

3. Procédé selon la revendication 2,
**caractérisé en ce que**
le procédé comprend l'étape suivante :
initier l'établissement de la connexion de communication (5) entre le terminal mobile (4) et le ou les réseaux de télécommunications mobiles (1, 2, 3) exécutés par l'au moins un fournisseur de services de télécommunication sélectionné en effectuant un établissement de connexion de commande de ressources radio (904 à 908).

4. Procédé selon la revendication 1,
**caractérisé en ce que**
le procédé comprend les étapes suivantes :
demander, en envoyant le ou les messages de requête (41, 42, 43) depuis le terminal mobile (4) vers le ou les noeuds de réseau (10, 20, 30), un ou plusieurs attributs associés au service de télécommunication fourni par le ou les fournisseurs de services de télécommunication ; et
sélectionner l'au moins un parmi le ou les fournisseurs de services de télécommunication en tant que fournisseur du service de télécommunication en se basant sur le ou les attributs demandés.

5. Terminal mobile (4) pour utiliser un service de télécommunication fourni par un ou plusieurs fournisseurs de services de télécommunication associés à un ou plusieurs réseaux de télécommunications mobiles (1, 2, 3),
**caractérisé en ce que**
le terminal mobile (4) comprend une unité de commande (400) adaptée pour envoyer un ou plusieurs messages de requête (41, 42, 43) liés au service de télécommunication à un ou plusieurs noeuds de réseau (10, 20, 30) associés à un ou plusieurs réseaux de télécommunications mobiles (1, 2, 3) sans enregistrer le terminal mobile (4) dans le ou les réseaux de télécommunications mobiles (1, 2, 3) en utilisant un ou plusieurs canaux de communication accessibles publiquement pour des messages de requête du ou des réseaux de télécommunications mobiles (1, 2, 3) pour la transmission du ou des messages de requête (41, 42, 43) ; recevoir un ou plusieurs messages de réponse (14, 24, 34) à un ou plusieurs messages de requête (41, 42, 43) sans allouer de ressources réseau du ou des réseaux de télécommunications mobiles (1, 2, 3) en utilisant un ou plusieurs canaux de communication accessibles publiquement pour des messages de requête du ou des réseaux de télécommunications mobiles (1, 2, 3) pour la transmission du ou des messages de réponse (14, 24, 34), le ou les messages de réponse (14, 24, 34) générés par le ou les noeuds de réseau (10, 20, 30) après la réception et le traitement du ou des messages de requête (41, 42, 43) par le ou les noeuds de réseau (10, 20, 30), et le ou les messages de réponse (14, 24, 34) fournissant des données propres au service étant associés à un ou plusieurs des fournisseurs de services de télécommunication, évaluer le ou les messages de réponse (14, 24, 34) reçus, sélectionner au moins un parmi le ou les fournisseurs de services de télécommunication en se basant sur l'évaluation du ou des messages de réponse (14, 24, 34) reçus, et commander l'utilisation du service de télécommunication fourni par l'au moins un fournisseur de services de télécommunication sélectionné,
l'unité de commande (400) étant en outre adaptée pour envoyer une ou plusieurs demandes de requête (901) d'une procédure supplémentaire en tant qu'un ou plusieurs messages de requête (41, 42, 43) et pour recevoir une ou plusieurs réponses de requête (902) de la procédure supplémentaire en tant qu'un ou plusieurs messages de réponse (14, 24, 34), dans lequel la procédure supplémentaire est fournie en tant que procédure supplémentaire d'un protocole de commande de ressources radio et comprend une demande de requête (901) devant être envoyée, par le terminal mobile (4), à un ou plusieurs noeuds de réseau (10, 20, 30) et une réponse de requête (902) devant être reçue par le terminal mobile (4) depuis le ou les noeuds de réseau (10, 20, 30) ;
ou l'unité de commande (400) est en outre adaptée pour envoyer un ou plusieurs messages de demande de connexion de commande de ressources radio étendus (904X) en tant qu'un ou plusieurs messages de requête ; et
recevoir le ou les messages de réponse (14, 24, 34), envoyés au moyen du ou des noeuds de réseau (10, 20, 30), en utilisant une nouvelle trame de message (912), dans lequel un des messages de demande de connexion de commande de ressources radio étendus est fourni en étendant un message de connexion de commande de ressources radio en allouant une valeur associée auxdits un ou plusieurs messages de requête (41, 42, 43) au paramètre « cause d'établissement » du message de demande de connexion de commande de ressources radio.

6. Noeud de réseau (10, 20, 30) associé à un ou plusieurs réseaux de télécommunications mobiles (1, 2, 3) pour fournir un terminal mobile (4) avec un service de télécommunication par un ou plusieurs fournisseurs de services de télécommunication associés à un ou plusieurs réseaux de télécommunications mobiles (1, 2, 3),
**caractérisé en ce que**
le noeud de réseau (10, 20, 30) comprend une unité de commande (100, 200, 300) adaptée pour recevoir, depuis le terminal mobile (4), un ou plusieurs messages de requête (41, 42, 43) liés au service de télécommunication sans enregistrer le terminal mobile (4) dans le ou les réseaux de télécommunications mobiles (1, 2, 3) en utilisant un ou plusieurs canaux de communication accessibles publiquement pour des messages de requête du ou des réseaux de télécommunications mobiles (1, 2, 3) pour la transmission du ou des messages de requête (41, 42, 43), traiter le ou les messages de requête (41, 42, 43) reçus, générer un ou plusieurs messages de réponse (14, 24, 34) aux messages de requête (41, 42, 43) reçus, le ou les messages de réponse (14, 24, 34) fournissant des données propres au service associées à un ou plusieurs des fournisseurs de services de télécommunication, envoyer le ou les messages de réponse (14, 24, 34) au terminal mobile (4) sans allouer de ressources réseau du ou des réseaux de télécommunications mobiles (1, 2, 3) en utilisant un ou plusieurs canaux de communication accessibles publiquement pour des messages de requête du ou des réseaux de télécommunications mobiles (1, 2, 3) pour la transmission du ou des messages de réponse (14, 24, 34) pour une évaluation du ou des messages de réponse (14, 24, 34) reçus et une sélection d'au moins un parmi le ou les fournisseurs de services de télécommunication en se basant sur l'évaluation du ou des messages de réponse (14, 24, 34) reçus par le terminal mobile (4), et initier une réservation de ressources pour la fourniture du service de télécommunication,
l'unité de commande (100, 200, 300) étant en outre adaptée pour recevoir une ou plusieurs demandes de requête (901) d'une procédure supplémentaire en tant qu'un ou plusieurs messages de requête (41, 42, 43) et pour envoyer une ou plusieurs réponses de requête (902) de la procédure supplémentaire en tant qu'un ou plusieurs messages de réponse (14, 24, 34), dans lequel la procédure supplémentaire est fournie en tant que procédure supplémentaire d'un protocole de commande de ressources radio et comprend une demande de requête (901) devant être reçue par le noeud de réseau (10, 20, 30) depuis le terminal mobile (4) et une réponse de requête (902) devant être envoyée, par le noeud de réseau (10, 20, 30), au terminal mobile (4) ;
ou l'unité de commande (100, 200, 300) est en outre adaptée pour recevoir un ou plusieurs messages de demande de connexion de commande de ressources radio étendus (904X) en tant qu'un ou plusieurs messages de requête (41, 42, 43) ; et envoyer le ou les messages de réponse (14, 24, 34) en utilisant une nouvelle trame de message (912), dans lequel un des messages de demande de connexion de commande de ressources radio étendus est fourni en étendant un message de connexion de commande de ressources radio en allouant une valeur associée auxdits un ou plusieurs messages de requête (41, 42, 43) au paramètre « cause d'établissement » du message de demande de connexion de commande de ressources radio.
